# EUROPEAN PATENT APPLICATION

(11) **EP 4 664 294 A1**
(43) Date of publication of application: **17.12.2025**
(21) Application number: 23924879.2
(22) Date of filing: 22.08.2023
(51) Int. Cl.: G06F 11/22, G06F 11/30

(54) **METHOD FOR PROLONGING SERVICE LIFE OF HARD DISK, AND RELATED APPARATUS**

(30) Priority: 28.02.2023 CN 202310223534
(71) Applicant: Huawei Technologies Co., Ltd., Shenzhen, Guangdong 518129 (CN)
(72) Inventor: ZHANG, Jian, Shenzhen, Guangdong 518129 (CN); WU, Liming, Shenzhen, Guangdong 518129 (CN); LIAN, Tao, Shenzhen, Guangdong 518129 (CN); CAO, Hongqiang, Shenzhen, Guangdong 518129 (CN)
(74) Representative: Isarpatent
(86) International application number: PCT/CN2023/114165
(87) International publication number: WO 2024/178921

(57) **Abstract**

This application discloses a method for prolonging a service life of a storage drive and a related apparatus. The method includes: monitoring a first indicator of a storage drive, where the storage drive is at a first level; and adjusting the storage drive from the first level to a second level when the first indicator does not meet a first condition, where the storage drive has a plurality of levels, the plurality of levels include the first level and the second level, an indicator requirement of the storage drive at the first level is higher than an indicator requirement of the storage drive at the second level, and levels of the storage drive are classified based on indicators of the storage drive. In this way, the service life of the storage drive is prolonged.

## Description

This application claims priority to Chinese Patent Application No. 202310223534.X, filed with the China National Intellectual Property Administration on February 28, 2023 and entitled "METHOD FOR PROLONGING SERVICE LIFE OF STORAGE DRIVEAND RELATED APPARATUS", which is incorporated herein by reference in its entirety.

### TECHNICAL FIELD

This application relates to the field of storage technologies, and in particular, to a method for prolonging a service life of a storage drive and a related apparatus.

### BACKGROUND

A storage drive (hard disk) is one of the most important memories in a computer, and includes a solid-state drive (Solid State Disk or Solid State Drive, SSD), a hard disk drive, and the like. When the storage drive is operating, various unexpected situations may occur, and may affect a service life of the storage drive. Currently, a service life of a storage drive is evaluated generally based on an indicator of the storage drive, for example, a degree of wear of the storage drive. When the degree of wear of the storage drive reaches an upper limit, the storage drive is taken out of service. Consequently, the service life of the storage drive is short.

### SUMMARY

This application provides a method for prolonging a service life of a storage drive and a related apparatus, to prolong the service life of the storage drive.

According to a first aspect, this application provides a method for prolonging a service life of a storage drive. The method is applied to the field of storage technologies. The method includes:
first, monitoring a first indicator of a storage drive, where the storage drive is at a first level; and second, adjusting the storage drive from the first level to a second level when the first indicator does not meet a first condition. The storage drive has a plurality of levels, the plurality of levels include the first level and the second level, an indicator requirement of the storage drive at the first level is higher than an indicator requirement of the storage drive at the second level, and levels of the storage drive are classified based on indicators of the storage drive.

In this application, when the first indicator of the storage drive does not meet the requirement, the storage drive is adjusted from the corresponding first level to the second level, so that the storage drive can continue to be used, thereby improving serviceability of the storage drive, prolonging the service life of the storage drive, and further reducing use costs, compared with a case in which a storage drive is directly discarded when the storage drive does not meet a related requirement of a specific indicator.

In a possible implementation of the first aspect, the first indicator includes a first performance indicator, and the first condition includes:

The first performance indicator falls within a corresponding range of the performance indicator of the storage drive at the first level.

In this implementation, the serviceability of the storage drive is evaluated based on the performance indicator of the storage drive, to prolong the service life of the storage drive.

In a possible implementation of the first aspect, the first performance indicator includes read/write latency of an I/O, and the first condition includes:

In a cumulative first time period, a proportion of I/Os with read/write latency not exceeding a first value on the storage drive is greater than or equal to a first threshold, where the first threshold is greater than 0 and less than 1.

In this implementation, read/write latency of I/Os on the storage drive is monitored, and the serviceability of the storage drive is determined by using the corresponding read/write latency of the I/Os on the storage drive as a determining criterion, to prolong the service life of the storage drive.

In a possible implementation of the first aspect, adjusting the storage drive from the first level to the second level when the first indicator does not meet the first condition includes:
obtaining a corresponding range of the performance indicator of the storage drive at each level; and
adjusting the storage drive from the first level to the second level when the first performance indicator does not meet the first condition and the first performance indicator falls within a corresponding range of the performance indicator of the storage drive at the second level.

In this implementation, whether the corresponding first performance indicator of the storage drive meets a range requirement of the storage drive at the first level is determined based on indicator ranges of the storage drive at respective levels, so that when the storage drive cannot meet a performance indicator requirement at the first level, the level of the storage drive is adaptively adjusted, thereby improving the serviceability of the storage drive and prolonging the service life of the storage drive.

In a possible implementation of the first aspect, the first indicator includes a first reliability indicator, and the first condition includes:

The first reliability indicator falls within a corresponding range of the reliability indicator of the storage drive at the first level.

In this implementation, the serviceability of the storage drive is evaluated based on the reliability indicator of the storage drive, to prolong the service life of the storage drive.

In a possible implementation of the first aspect, the first reliability indicator includes a quantity of bad tracks, and the first condition includes:

During reading of data of a specified capacity from the storage drive, the obtained quantity of bad tracks does not exceed a second value.

In this implementation, the quantity of bad tracks of the storage drive is monitored, and the serviceability of the storage drive is determined by using the corresponding quantity of bad tracks of the storage drive as a determining criterion, to prolong the service life of the storage drive.

In a possible implementation of the first aspect, the first indicator further includes a first performance indicator, and adjusting the storage drive from the first level to the second level when the first indicator does not meet the first condition includes:
obtaining a corresponding range of the reliability indicator of the storage drive at each level; and
adjusting the storage drive from the first level to the second level when the first reliability indicator does not meet the first condition and the first reliability indicator falls within a corresponding range of the reliability indicator of the storage drive at the second level.

When it is determined that the first performance indicator falls within a corresponding range of the performance indicator of the storage drive at a specific level, and the level is different from the second level, the storage drive is adjusted to a level corresponding to a lower indicator requirement in the level and the second level.

In this implementation, in a case in which both the performance indicator and the reliability indicator of the storage drive are monitored, and a level having a lower indicator requirement is used as a level to be adjusted to of the storage drive, to ensure that the level adjusted to can meet current requirements for the performance indicator and reliability indicator of the storage drive, and match an actual condition of the storage drive.

In a possible implementation of the first aspect, the storage drive stores different types of data at different levels, the storage drive stores a first type of data at the first level, the storage drive stores a second type of data at the second level, and an indicator requirement corresponding to the first type of data is higher than an indicator requirement corresponding to the second type of data.

In this implementation, different types of data correspond to different indicator requirements. The different types of data are stored in storage drives at different levels, so as to meet the indicator requirements corresponding to the different types of data.

In a possible implementation of the first aspect, the storage drive includes a solid-state drive.

According to a second aspect, this application provides an apparatus for prolonging a service life of a storage drive. For beneficial effects, refer to descriptions of the first aspect. Details are not described herein again. The apparatus has functions of implementing actions in the method example in the first aspect. The functions may be implemented by hardware, or may be implemented by hardware executing corresponding software. The hardware or the software includes one or more modules corresponding to the functions. In a possible design, the apparatus further includes:
a monitoring module, configured to monitor a first indicator of the storage drive, where the storage drive is at a first level; and
an adjustment module, configured to adjust the storage drive from the first level to a second level when the first indicator does not meet a first condition, where the storage drive has a plurality of levels, the plurality of levels include the first level and the second level, an indicator requirement of the storage drive at the first level is higher than an indicator requirement of the storage drive at the second level, and levels of the storage drive are classified based on indicators of the storage drive.

In a possible implementation of the second aspect, the first indicator includes a first performance indicator, and the first condition includes:

The first performance indicator falls within a corresponding range of the performance indicator of the storage drive at the first level.

In a possible implementation of the second aspect, the first performance indicator includes read/write latency of an I/O, and the first condition includes:

In a cumulative first time period, a proportion of I/Os with read/write latency not exceeding a first value on the storage drive is greater than or equal to a first threshold, where the first threshold is greater than 0 and less than 1.

In a possible implementation of the second aspect, the adjustment module is further configured to:
obtain a corresponding range of the performance indicator of the storage drive at each level; and
adjust the storage drive from the first level to the second level when the first performance indicator does not meet the first condition, and the first performance indicator falls within a corresponding range of the performance indicator of the storage drive at the second level.

In a possible implementation of the second aspect, the first indicator includes a first reliability indicator, and the first condition includes:

The first reliability indicator falls within a corresponding range of the reliability indicator of the storage drive at the first level.

In a possible implementation of the second aspect, the first reliability indicator includes a quantity of bad tracks, and the first condition includes:

During reading of data of a specified capacity from the storage drive, the obtained quantity of bad tracks does not exceed a second value.

In a possible implementation of the second aspect, the first indicator further includes a first performance indicator, and the adjustment module is further configured to:
obtain a corresponding range of the reliability indicator of the storage drive at each level; and
adjust the storage drive from the first level to the second level when the first reliability indicator does not meet the first condition and the first reliability indicator falls within a corresponding range of the reliability indicator of the storage drive at the second level.

When it is determined that the first performance indicator falls within a corresponding range of the performance indicator of the storage drive at a specific level, and the level is different from the second level, the storage drive is adjusted to a level corresponding to a lower indicator requirement in the level and the second level.

In a possible implementation of the second aspect, the storage drive stores different types of data at different levels, the storage drive stores a first type of data at the first level, the storage drive stores a second type of data at the second level, and an indicator requirement corresponding to the first type of data is higher than an indicator requirement corresponding to the second type of data.

In a possible implementation of the second aspect, the storage drive includes a solid-state drive.

According to a third aspect, this application provides a controller, including an interface card, a memory, and a processor. The interface card is configured to receive data. The memory stores the data and a program executable by the processor. When the processor executes the program, the controller implements the method according to any one of the first aspect or the possible implementations of the first aspect.

According to a fourth aspect, this application provides a storage system, including a controller and a storage drive. The controller includes a memory and a processor. The memory stores a program. When the program is executed by the processor, the method according to any one of the first aspect or the possible implementations of the first aspect is implemented.

According to a fifth aspect, this application provides a storage medium. The storage medium stores a program. When the program is executed by a processor, the method according to any one of the first aspect or the possible implementations of the first aspect is implemented.

According to a sixth aspect, this application provides a computer program product. When the computer program product is executed by a computer, the method according to any one of the first aspect or the possible implementations of the first aspect is implemented.

According to a seventh aspect, this application provides a chip system. The chip system includes a processor, to implement the method according to any one of the first aspect or the possible implementations of the first aspect. In a possible design, the chip system further includes a memory, to store program instructions and/or data. The chip system may include a chip, or may include a chip and another discrete component.

The solutions in the second aspect to the seventh aspect are used to implement or support implementation of the method according to any one of the first aspect or the possible implementations of the first aspect, and therefore can achieve beneficial effects the same as or corresponding to the first aspect. Details are not described herein again.

### BRIEF DESCRIPTION OF DRAWINGS

FIG. 1a is a diagram of a structure of a storage system according to an embodiment of this application;
FIG. 1b is a diagram of a structure example of a controller in a storage system according to an embodiment of this application;
FIG. 1c is a schematic flowchart of a method for prolonging a service life of a storage drive according to an embodiment of this application;
FIG. 2 is another schematic flowchart of a method for prolonging a service life of a storage drive according to an embodiment of this application;
FIG. 3 is a diagram of storage drive classification according to an embodiment of this application;
FIG. 4 is a diagram of displayed operations in a method for prolonging a service life of a storage drive according to an embodiment of this application;
FIG. 5 is a diagram of a structure of an apparatus for prolonging a service life of a storage drive according to an embodiment of this application; and
FIG. 6 is a diagram of a structure of a controller according to an embodiment of this application.

### DESCRIPTION OF EMBODIMENTS

The following clearly and completely describes technical solutions in embodiments of this application with reference to accompanying drawings in embodiments of this application. It is clear that the described embodiments are merely a part rather than all of embodiments of this application. All other embodiments obtained by a person skilled in the art based on embodiments of this application without creative efforts shall fall within the protection scope of this application. A person skilled in the art may learn that, as technologies develop and a new scenario emerges, the technical solutions provided in embodiments of this application are also applicable to resolve a similar technical problem.

In the specification, claims, and foregoing accompanying drawings of this application, the terms "first", "second", and the like are used to distinguish between similar objects, but do not necessarily indicate a specific sequence or order. It should be understood that the data termed in such a way are interchangeable in proper circumstances so that embodiments described herein can be implemented in an order different from the order illustrated or described herein. Moreover, the terms "include", "have" and any other variants are intended to cover the non-exclusive inclusion, for example, a process, method, system, product, or device that includes a list of steps or modules is not necessarily limited to those expressly listed steps or modules, but may include other steps or modules not expressly listed or inherent to such a process, method, product, or device.

The term "and/or" in this application describes an association relationship for describing associated objects and represents that three relationships may exist. For example, A and/or B may indicate the following three cases: Only A exists, both A and B exist, and only B exists. In addition, the character "/" in this application generally indicates an "or" relationship between the associated objects.

It should also be noted that in some alternative implementations, the specified functions/actions may not appear in orders of the accompanying drawings. For example, actually, two accompanying drawings shown in succession may essentially occur at the same time or may sometimes be performed in a reverse order, depending on the related functions/actions.

In embodiments of this application, unless otherwise specified, "at least one" means one or more, and "a plurality of" means two or more. It may be understood that, in this application, "when" and "if" both mean that an apparatus performs corresponding processing in an objective situation, and are not intended to limit time or require the apparatus to perform determining during implementation, and do not mean that there is any other limitation. In addition, the specific term "example" means "used as an example, embodiment, or illustration". Any embodiment described as an "example" is not necessarily explained as being superior or better than other embodiments.

To better understand solutions in embodiments of this application, the following first describes an application scenario of embodiments of this application. A method for prolonging a service life of a storage drive provided in embodiments of this application is mainly applied to a storage system, to prolong the service life of the storage drive.

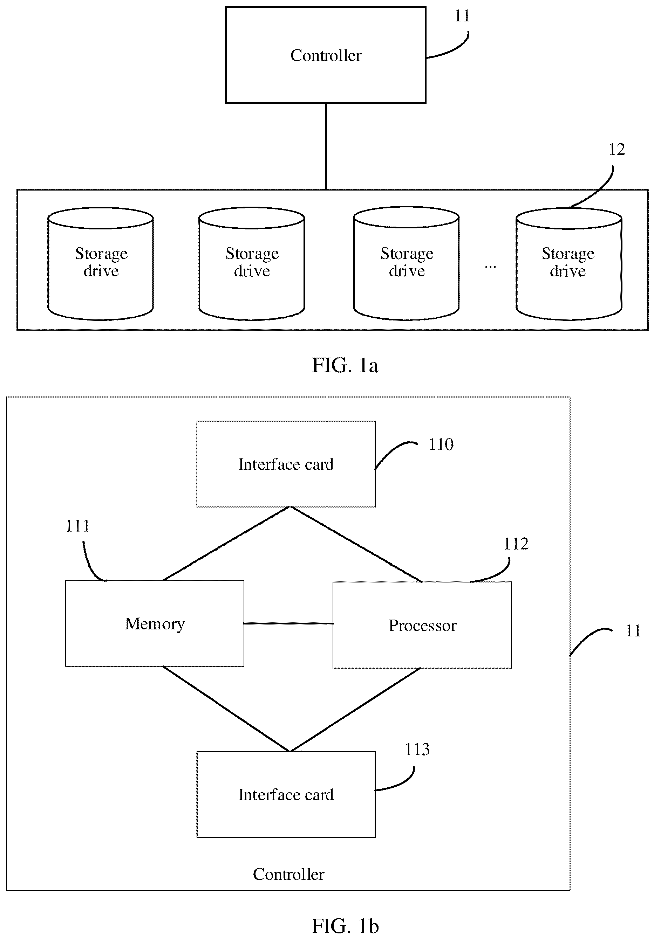

The following describes an example of an application scenario of the method for prolonging a service life of a storage drive according to an embodiment of this application with reference to FIG. 1a and FIG. 1b. FIG. 1a is a diagram of a structure of a storage system according to an embodiment of this application. As shown in FIG. 1a, the storage system includes at least one controller 11 and a plurality of storage drives 12.

The controller 11 is connected to a host (not shown in the figure). The controller 11 may be a computing device, for example, a server or a desktop computer. A writing system and an application program are installed on the controller 11. The controller 11 may receive an input/output (input/output, I/O) request from the host. The controller 11 may further store data carried in the I/O request, and write the data into the storage drive 12.

The controller 11 is a system controller, and the system controller is an independent device different from a control chip in the storage drive 12. In this embodiment, the control chip in the storage drive 12 is referred to as a storage drive controller. Unless otherwise specified, the controller in this embodiment refers to the system controller.

It should be noted that FIG. 1a is merely an example for description, and shapes of the controller 11 and the storage drives 12 shown in FIG. 1a do not represent actual physical structures of the controller 11 and the storage drives 12, which are not limited herein. In addition, a connection manner between the controller and the storage drive 12 is not limited in embodiments of this application, and the only requirement is that the controller 11 and the storage drive 12 can communicate with each other.

FIG. 1b is an example diagram of a structure of a controller in a storage system according to an embodiment of this application. As shown in FIG. 1b, the controller 11 includes an interface card 110, a memory 111, a processor 112, and an interface card 113.

The interface card 110 is configured to communicate with a host, and receive an instruction sent by the host. The controller 11 may receive a write instruction of the host through the interface card 110.

The processor 112 is a central processing unit (central processing unit, CPU). In this embodiment of this application, the processor 112 may be configured to receive a write instruction or a read instruction from the host and process the instruction. The processor 112 may further send data in the write instruction to the storage drive 12.

Optionally, the controller 11 may further include the memory 111.

The memory 111 includes a volatile memory, a nonvolatile memory, or a combination thereof. The volatile memory is, for example, a random-access memory (random-access memory, RAM). The nonvolatile memory is any machine-readable medium that can store program code, for example, a floppy disk, a storage drive, a solid-state drive (solid-state drive, SSD), or an optical disc.

The memory 111 has a power-down retention function. The power-down retention function means that data stored in the memory 111 is not to be lost when a system loses power and then is powered on again. There may be one or more memories 111, configured to temporarily store data received from the host or data read from the storage drive 12. For example, when receiving a plurality of write instructions sent by the host, the controller 11 may temporarily store data in the plurality of write instructions into the memory 111.

The interface card 113 is configured to communicate with the storage drive 12, and the controller 11 may send the data in the write instruction through the interface card 113 to the storage drive 12 for storage.

It may be understood that the structure of the storage system shown in FIG. 1a and FIG. 1b is merely an example. The method for prolonging a service life of a storage drive provided in embodiments of this application may be, but is not limited to being, applied to the foregoing described structure. This is not limited herein.

Currently, when the storage drive 12 is operating, various unexpected situations may occur, and may affect the service life of the storage drive. Currently, a service life of a storage drive is generally evaluated based on an indicator of the storage drive, for example, a degree of wear of the storage drive. When the degree of wear of the storage drive reaches an upper limit, the storage drive is taken out of service. Therefore, the service life of the storage drive is short.

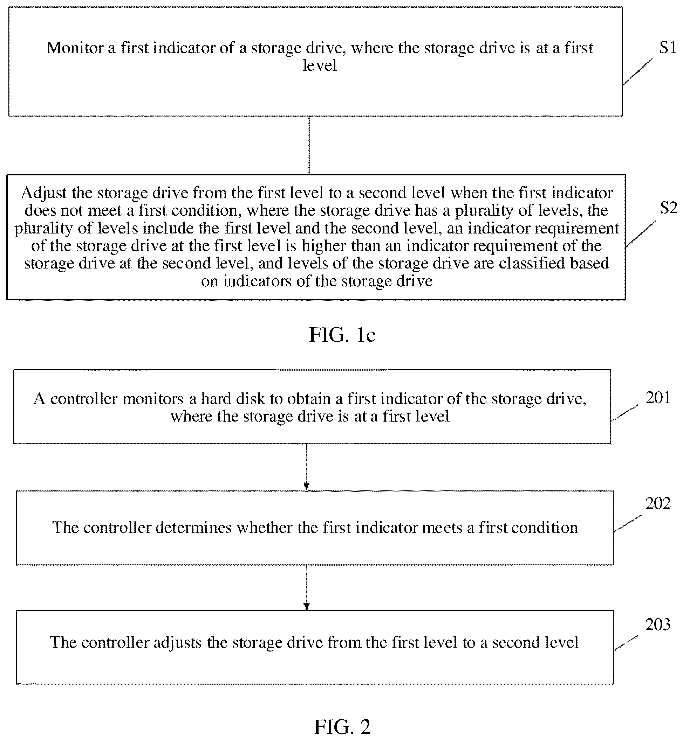

To resolve the foregoing problem, an embodiment of this application provides a method for prolonging a service life of a storage drive. The method is applied to the controller 11 shown in FIG. 1a. Specifically, FIG. 1c is a schematic flowchart of a method for prolonging a service life of a storage drive according to an embodiment of this application. The method specifically includes: S1. Monitor a first indicator of the storage drive, where the storage drive is at a first level. The first indicator includes a first performance indicator. Alternatively, the first indicator includes a first reliability indicator. Content of the first indicator is not limited herein. S2. Adjust the storage drive from the first level to a second level when the first indicator does not meet a first condition, where the storage drive has a plurality of levels, the plurality of levels include the first level and the second level, an indicator requirement of the storage drive at the first level is higher than an indicator requirement of the storage drive at the second level, and levels of the storage drive are classified based on indicators of the storage drive. When the first indicator of the storage drive does not meet the requirement, the storage drive is adjusted from the corresponding first level to the second level, so that the storage drive can continue to be used, thereby improving serviceability of the storage drive, prolonging the service life of the storage drive, and further reducing use costs, compared with a case in which a storage drive is directly discarded when the storage drive does not meet a related requirement of a specific indicator.

The foregoing describes a scenario to which the method for prolonging a service life of a storage drive provided in embodiments of this application is applied. The following describes an implementation process of the method for prolonging a service life of a storage drive provided in embodiments of this application in detail.

First, to better understand solutions in embodiments of this application, the following first describes related terms and concepts that may be used in embodiments of this application.

### (1) Storage drive

The storage drive is a primary storage device on a computer.

### (2) Solid-state drive

The solid-state drive (Solid State Disk or Solid State Drive, SSD) is a storage drive produced from a solid-state electronic storage chip array, and includes a control unit, a storage unit, and a cache unit. Different from a hard disk drive that includes mechanical components such as a magnetic disk and a magnetic head, an entire structure of the solid-state disk includes no mechanical apparatus; rather, the solid-state drive is made up of electronic chips and a circuit board. The solid-state drive is free of mechanical components such as a magnetic head, platter, and control motor found in a hard disk drive, has no process of motor-driven spinning, and has no mechanical moving component inside. Therefore, the solid-state drive is subject to no mechanical failures and is more resistant to collision, shock, and vibration.

### (2) Latency

The latency refers to time needed for a packet to be transmitted from one end of a network to another end of the network.

In embodiments of this application, descriptions mainly use input/output latency as an example.

### (3) Bad track

The bad track (Bad track) is an area on a storage medium that cannot be read, and generally, may include one or more sectors. When content of a sector cannot be properly read or a sector cannot be written to properly, the sector fails. A track in which the sector is located is called a bad track.

### (4) Bad block

The bad block is an area on a storage medium that cannot be erased.

It should be noted that descriptions of the bad track mainly apply to a device like a hard disk drive, and descriptions of the bad block mainly apply to a device like a solid-state drive. In embodiments of this application, a bad track is used as an example for description, and is not intended for limitation.

### (6) Flash memory chip

The flash memory chip is a physical carrier for storage of a solid-state drive.

The foregoing describes technical terms in embodiments of this application. For ease of understanding, the following describes, in detail with reference to accompanying drawings and application scenarios, the method for prolonging a service life of a storage drive provided in embodiments of this application. A person of ordinary skill in the art may learn that, as technologies develop and a new scenario emerges, the technical solutions provided in embodiments of this application are also applicable to resolve a similar technical problem.

FIG. 2 is another schematic flowchart of a method for prolonging a service life of a storage drive according to an embodiment of this application. The method for prolonging a service life of a storage drive may be implemented by the controller shown in FIG. 1a. It may be understood that the storage system shown in FIG. 1a may include a plurality of storage drives, and the controller monitors each storage drive to monitor an operating status of each hardware. As shown in FIG. 2, the controller may perform the following step 201 to step 203, to prolong the service life of the storage drive.

201. The controller monitors the storage drive to obtain a first indicator of the storage drive, where the storage drive is at a first level.

In this embodiment of this application, when the storage drive is at the first level, the controller monitors the storage drive to obtain the first indicator of the storage drive. The storage drive has a plurality of levels, the plurality of levels include the first level, levels of the storage drive are classified based on indicators of the storage drive, and indicator requirements of the storage drive at different levels are different.

In an optional implementation, the storage drive includes a solid-state drive.

It should be understood that a main function of the storage drive is to store data. The solid-state drive is merely an example. In an actual application process, a specific type of the storage drive used may be set based on an actual requirement, and is not limited herein.

In addition, it may be understood that content of the first indicator of the storage drive may also be set based on an actual requirement, and is not limited herein, either.

In an optional implementation, the first indicator includes a first performance indicator.

In this implementation, the first performance indicator is an indicator mainly used to measure performance of the storage drive.

Optionally, the first performance indicator includes read/write latency of an I/O.

Specifically, latency of an I/O may be understood as time consumed in a process from time at which the controller sends an I/O instruction to time at which the I/O is completed.

It may be understood that the storage drive is mainly used for reading and writing of data, and read/write latency of an I/O is one of core indicators of the storage drive. Therefore, I/O latency of the storage drive may be monitored to monitor an operating status of the storage drive.

Optionally, in a process in which the controller monitors the I/O latency, read latency and write latency are generally obtained separately.

For example, the controller may obtain read latency or write latency of a single I/O in the following manner.

When the storage drive receives the I/O instruction issued by the controller, the storage drive records time T1 at which the I/O instruction is received. Then, after completing a related read/write operation according to the I/O instruction, the storage drive may feed back, to the controller, an operation success or failure state, and record feedback time as T2. In this case, the controller may obtain the time recorded by the storage drive, and a difference between T2 and T1 is used as the I/O latency of the storage drive.

Optionally, the read latency or write latency of the I/O may further include average read latency or average write latency. Average read latency is a quotient of read latency of all I/Os and a quantity of all I/Os, and average write latency is a quotient of write latency of all I/Os and a quantity of all I/Os. It should be understood that read latency and write latency of I/Os are calculated separately, and the controller may distinguish between the read latency and the write latency based on content of I/O instructions.

Optionally, when the controller collects statistics about I/O latency, read latency and write latency may not be distinguished. This may be specifically set based on an actual requirement, and is not limited herein.

In addition, in a process in which the controller monitors the I/O latency of the storage drive, optionally, the controller may continuously monitor the I/O latency of the storage drive in a continuous time period. Alternatively, optionally, the controller may monitor the I/O latency of the storage drive over discrete time intervals, and monitoring time may be a cumulative result of all time periods.

For example, the controller may continuously monitor the first indicator of the storage drive in one hour, one day, or one week, to obtain the I/O latency of the storage drive. Alternatively, optionally, the controller continuously monitors the first indicator of the storage drive for several cycles, for example, 5-second cycles, to obtain the I/O latency of the storage drive.

It may be understood that, in an actual application process, duration, the time interval, and the like of monitoring for the storage drive by the controller may all be set based on an actual requirement, and are merely described as an example herein, but not intended for limitation.

In another optional implementation, the first indicator includes a first reliability indicator.

In this implementation, the reliability indicator may be understood as a capability of the storage drive to complete a specified function under a use condition.

Optionally, the first reliability indicator includes a quantity of bad tracks.

Specifically, a bad track refers to an area on the storage drive that cannot be read.

It may be understood that the storage drive is mainly used for reading and writing of data, and the quantity of bad tracks is one of the core indicators of the storage drive. Therefore, the quantity of bad tracks of the storage drive may be monitored to monitor an operating status of the storage drive.

202. The controller determines whether the first indicator meets a first condition. If the first indicator meets the first condition, the operation is stopped. If the first indicator does not meet the first condition, step 203 is performed.

In this embodiment of this application, after monitoring the storage drive and obtaining the first indicator of the storage drive, the controller determines whether the first indicator meets the preset first condition.

In an optional implementation, the first indicator includes a first performance indicator. In this implementation, optionally, the first condition includes:

The first performance indicator falls within a corresponding range of the performance indicator of the storage drive at the first level.

Specifically, when the storage drive is at the first level, the controller evaluates serviceability of the storage drive by determining whether the first performance indicator falls within the corresponding range of the performance indicator of the storage drive at the first level.

Further, in an optional implementation, the first performance indicator includes read/write latency of an I/O. In this implementation, optionally, the first condition includes:

In a cumulative first time period, a proportion of I/Os with read/write latency not exceeding a first value on the storage drive is greater than or equal to a first threshold, where the first threshold is greater than 0 and less than 1.

Specifically, in the cumulative first time period, the controller collects statistics about the proportion of I/Os with read/write latency not exceeding the first value on the storage drive, and compares the first value with the first threshold, to determine a corresponding level of the storage drive. The controller collects statistics about latency of read and latency of write separately. Specifically, the controller collects statistics about the latency of read or write on the storage drive, and determines a proportion of read or write with latency exceeding the first value in the latency of read or write.

It should be understood that the storage drive has a plurality of levels, and a requirement of the performance indicator of the storage drive varies correspondingly at different levels. The performance indicator of the storage drive is monitored, to match the performance indicator with a corresponding level, so as to determine a current level of the storage drive.

For example, the controller determines levels of the storage drive based on the I/O latency of the storage drive, and the levels may include:
Level 1: Latency of 99.9% of I/Os does not exceed 1 ms.
Level 2: Latency of 99.9% of I/Os does not exceed 10 ms.
Level 3: Latency of 99.9% of I/Os does not exceed 100 ms.

Correspondingly, the first level is used as an example. If the controller performs monitoring for more than one hour, one day, or one week, and detects that latency of 0.01% of I/Os exceeds 1 ms, or if the controller performs monitoring for N cycles at a cycle of 5s, and detects that the latency of 0.01% of I/Os exceeds 1 ms in M cycles in the N cycles, it indicates that the first condition is not met. Both N and M are positive integers.

It should be noted that the implementation in this example is merely an optional implementation, and is not intended for limitation. In addition, both the first value and the first threshold may be set based on an actual requirement, and are not limited herein.

In an optional implementation, the first indicator includes the first reliability indicator.

In this implementation, optionally, the first condition includes that the first reliability indicator falls within a corresponding range of the reliability indicator of the storage drive at the first level.

Specifically, when the storage drive is at the first level, the controller evaluates serviceability of the storage drive by determining whether the first reliability indicator falls within a corresponding range of the reliability indicator of the storage drive at the first level.

Further, in an optional manner, the first reliability indicator includes a quantity of bad tracks. In this implementation, optionally, the first condition includes:

During reading of data of a specified capacity from the storage drive, the obtained quantity of bad tracks does not exceed a second value.

Specifically, when reading the specific amount of data from the storage drive, the controller collects statistics about the quantity of bad tracks, and compares the quantity of bad tracks with the second value, to determine a corresponding level of the storage drive.

It should be understood that the storage drive has a plurality of levels, and a requirement of the reliability indicator of the storage drive varies correspondingly at different levels. The reliability indicator of the storage drive is monitored, to match the reliability indicator with a corresponding level, so as to determine a current level of the storage drive.

For example, the controller determines levels of the storage drive based on the quantity of bad tracks corresponding to the specific amount of data read from the storage drive, and the levels may include:
Level 1: There is no more than one bad track during reading of 1 PB of data.
Level 2: There is no more than one bad track during reading of 100 TB of data.
Level 3: There is no more than one bad track during reading of 1 TB of data.

Correspondingly, the first level is used as an example for description. If the controller encounters one or more bad tracks during reading of 1 PB of data, or assuming that each time of reading 1 PB of data by the controller is considered as one cycle, if one or more bad tracks are encountered during reading of 1 PB of data in M cycles in N cycles, it indicates that the first condition is not met. Both N and M are positive integers.

It should be noted that the implementation in this example is merely an optional implementation, and is not intended for limitation. In addition, the second value may be set based on an actual requirement, and is not limited herein.

In addition, it should be noted that in an actual application process, the first indicator may include the first performance indicator and/or the first reliability indicator. When the first indicator includes both the first performance indicator and the first reliability indicator, for the first condition, requirements of both the first performance indicator and the first reliability indicator needs to be met.

For example, levels of the storage drive are determined based on the I/O latency of the storage drive and the quantity of bad tracks corresponding to the specific amount of data read from the storage drive, and the levels may include:
Level 1: Latency of 99.9% of I/Os does not exceed 1 ms, and there is no more than one bad track during reading of 1 PB of data.
Level 2: Latency of 99.9% of I/Os does not exceed 10 ms, and there is no more than one bad track during reading of 100 TB of data.
Level 3: Latency of 99.9% of I/Os does not exceed 100 ms, and there is no more than one bad track during reading of 1 TB of data.

The first level may be understood as a level that has high requirements on both the I/O latency and a proportion of bad tracks in a storage drive. The second level may be understood as a level that has medium requirements on both the I/O latency and the proportion of the bad tracks in the storage drive. The third level may be understood as a level that has low requirements on both the I/O latency and the proportion of the bad tracks in the storage drive. It should be understood that, in actual application, the levels of the storage drive may be set based on an actual requirement, are merely described as an example herein, but not intended for limitation.

In addition, it should be noted that both content of the first indicator and content of the first condition may also be set based on an actual requirement, and are not limited herein.

203. The controller adjusts the storage drive from the first level to a second level.

In this embodiment of this application, after determining that the first indicator does not meet the first condition, the controller adjusts the level of the storage drive from the first level to the second level, so that the storage drive meets an indicator requirement and can continue to be used. In this way, the service life of the storage drive is prolonged. The storage drive has a plurality of levels, the plurality of levels include the first level and the second level, an indicator requirement of the storage drive at the first level is higher than an indicator requirement of the storage drive at the second level, and levels of the storage drive are classified based on indicators of the storage drive.

In an optional implementation, that the controller adjusts the storage drive from the first level to the second level includes:

The controller obtains a corresponding range of the performance indicator of the storage drive at each level; and
the controller adjusts the storage drive from the first level to the second level when the first performance indicator does not meet the first condition, and the first performance indicator falls within a corresponding range of the performance indicator of the storage drive at the second level.

In this implementation, the controller first obtains the corresponding range of the performance indicator of the storage drive at each level. When the controller determines that the first performance indicator does not meet the first condition, and determines that the first performance indicator falls within a corresponding range of the performance indicator of the storage drive at the second level, it indicates that the current performance indicator of the storage drive meets the corresponding indicator requirement of the storage drive at the second level. In this case, the controller adjusts the storage drive from the first level to the second level.

It may be understood that the controller may adjust the level of the storage drive when either the first performance indicator or the first reliability indicator meets the indicator requirement, or adjust the level of the storage drive when both the first performance indicator and the first reliability indicator meet the indicator requirement. Specifically, the storage drive may be downgraded by one, two, or more levels based on an actual degree of deterioration of the storage drive. In a case that the first indicator includes both the first performance indicator and the first reliability indicator, if the controller determines that the first performance indicator falls within a corresponding range of the performance indicator of the storage drive at a third level, and determines that the first reliability indicator falls within a corresponding range of the reliability indicator of the storage drive at the second level, and the second level is different from the third level, the controller adjusts the storage drive to a level corresponding to a lower indicator requirement in the third level and the second level.

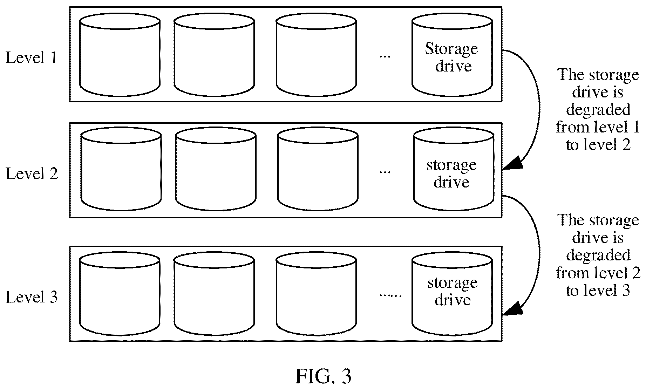

For example, it is assumed that the storage drive has three levels, and a first level of the storage drive is the highest level. When it is detected that the storage drive does not meet an indicator requirement corresponding to the first level, the controller downgrades the storage drive. FIG. 3 is a diagram of classification of storage drives into different levels according to an embodiment of this application.

It can be learned from FIG. 3 that, if the controller detects that a current indicator of the storage drive meets a corresponding requirement of the indicator of the storage drive at a specific level, the storage drive is directly downgraded from the first level to the specific level. Generally, a storage drive with the worst indicator performance is selected from storage drives at the first level for downgrade. In addition, the specific level is not necessarily the second level. The controller may directly downgrade the storage drive by several levels to meet an actual requirement.

If the controller detects that the current performance indicator of the storage drive meets a corresponding requirement of the indicator of the storage drive at the second level, the current reliability indicator of the storage drive meets a corresponding requirement of the indicator of the storage drive at the third level. If an indicator requirement corresponding to the third level is lower than an indicator requirement corresponding to the second level, the controller downgrades the level of the storage drive to a level having a lower requirement, that is, the third level.

It may be understood that in an actual operation process, if a test personnel or another personnel detects that a storage drive at the first level is downgraded, after the storage drive at the first level is downgraded, the test personnel or another personnel is to replenish a storage drive at the first level, so as to store data having a high requirement on an indicator.

In another optional implementation, the storage drive stores different types of data at different levels, the storage drive stores a first type of data at the first level, the storage drive stores a second type of data at the second level, and an indicator requirement corresponding to the first type of data is higher than an indicator requirement corresponding to the second type of data.

In this implementation, storage drives at different levels store data that is of different service types and that has different indicator requirements. Data of different service types has different indicator requirements. Data is stored on storage drives at different levels based on the requirements.

Data of different service types can be classified into different levels corresponding to the levels of the storage drive. For example, a level-1 storage drive stores data of a level-1 service type, and the service has a high requirement on latency and/or reliability. A level-2 storage drive stores data of a level-2 service type, and the service has a medium requirement on latency and/or reliability. A level-3 storage drive stores data of a level-3 service type, and the service has a low requirement on latency and/or reliability.

Optionally, the user may set requirements for an indicator corresponding to data of different service types, so that the controller stores the data in storage drives of corresponding levels.

For example, the user actively specifies level requirements corresponding to data of different service types, and specifically, may specify a requirement of data on latency or bad tracks, so that the controller stores the data in a storage drive of a corresponding level based on the requirement.

Optionally, in a possible implementation, the user may set, on a display screen, an indicator requirement corresponding to the data.

In this possible implementation, the user may perform an operation on a device like an external computer or the display screen, and enter a related requirement, to complete related setting.

For example, the user may determine, on a display interface, a level corresponding to the service. For example, the controller directly provides an interface for selecting a level on the display interface. After the user selects a level, data of a corresponding service type is stored in a storage drive of level 1. In addition, information about requirements of latency and bad track indicators corresponding to the level may be additionally displayed on the interface that displays the level. Optionally, the user may further directly enter a name of the service type, and the controller matches a corresponding level according to the name of the service type.

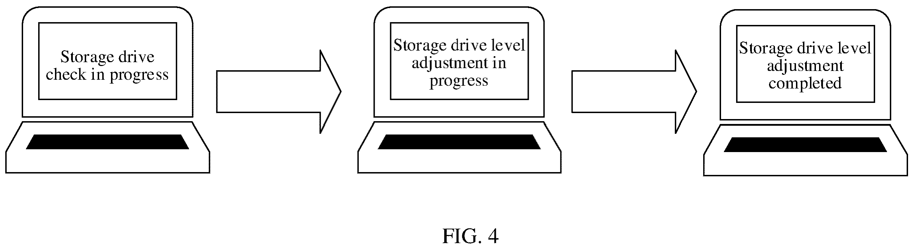

Correspondingly, after the user specifies, by using the display device, storage levels of the data of different service types, a level adjustment process of hardware may also be displayed on the display device in a process of monitoring the storage drive by the controller. For example, FIG. 4 is a diagram of displayed operations in a method for prolonging a service life of a storage drive according to an embodiment of this application. In a process in which the controller monitors the indicator of the storage drive and obtains the first indicator, content of "storage drive monitoring in progress" may be displayed on the screen, to notify the user that the storage drive is currently in a state in which indicator detection is being performed. When the controller determines that the first indicator does not meet the first condition and adjusts the level of the storage drive, content of "storage drive level adjustment in progress" may be displayed on the screen. After the controller adjusts the level of the storage drive, content of "storage drive level adjustment completed" may be displayed on the screen.

It should be noted that specific content displayed on the display screen and a type of the device with the display screen may be set based on an actual requirement, and are not limited herein.

It should be noted that, compared with a case in which a storage drive is directly discarded when the storage drive does not meet a related requirement of a specific indicator, in this embodiment of this application, data of different service types is matched with storage drives of corresponding levels based on serviceability of the storage drives and indicator requirements corresponding to the types of the data. When a related indicator of a storage drive deteriorates, the storage drive is downgraded. The storage drive is taken out of service only when the indicator does not meet the lowest requirement. In this way, the service life of the storage drive is prolonged.

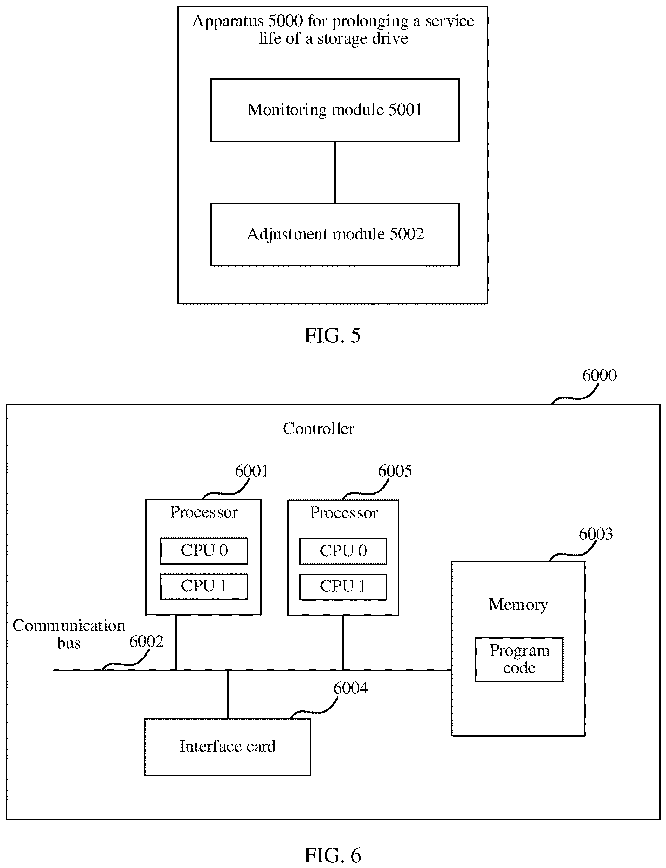

Based on the embodiments corresponding to FIG. 1a to FIG. 4, to better implement the foregoing solutions in embodiments of this application, the following further provides related devices configured to implement the foregoing solutions. FIG. 5 is a diagram of a structure of an apparatus for prolonging a service life of a storage drive according to an embodiment of this application. The apparatus for prolonging a service life of a storage drive may be located in the controller shown in FIG. 1a. The apparatus 5000 for prolonging a service life of a storage drive includes:
a monitoring module 5001, configured to monitor a first indicator of the storage drive, where the storage drive is at a first level; and
an adjustment module 5002, configured to adjust the storage drive from the first level to a second level when the first indicator does not meet a first condition, where the storage drive has a plurality of levels, the plurality of levels include the first level and the second level, an indicator requirement of the storage drive at the first level is higher than an indicator requirement of the storage drive at the second level, and levels of the storage drive are classified based on indicators of the storage drive.

In a possible implementation, the first indicator includes a first performance indicator, and the first condition includes:

The first performance indicator falls within a corresponding range of the performance indicator of the storage drive at the first level.

In a possible implementation, the first performance indicator includes read/write latency of an I/O, and the first condition includes:

In a cumulative first time period, a proportion of I/Os with read/write latency not exceeding a first value on the storage drive is greater than or equal to a first threshold, where the first threshold is greater than 0 and less than 1.

In a possible implementation, the adjustment module is further configured to:
obtain a corresponding range of the performance indicator of the storage drive at each level; and
adjust the storage drive from the first level to the second level when the first performance indicator does not meet the first condition, and the first performance indicator falls within a corresponding range of the performance indicator of the storage drive at the second level.

In a possible implementation, the first indicator includes a first reliability indicator, and the first condition includes:
The first reliability indicator falls within a corresponding range of the reliability indicator of the storage drive at the first level.

In a possible implementation, the first reliability indicator includes a quantity of bad tracks, and the first condition includes:

During reading of data of a specified capacity from the storage drive, the obtained quantity of bad tracks does not exceed a second value.

In a possible implementation, the first indicator further includes a first performance indicator, and the adjustment module is further configured to:
obtain a corresponding range of the reliability indicator of the storage drive at each level; and
adjust the storage drive from the first level to the second level when the first reliability indicator does not meet the first condition and the first reliability indicator falls within a corresponding range of the reliability indicator of the storage drive at the second level.

When it is determined that the first performance indicator falls within a corresponding range of the performance indicator of the storage drive at a specific level, and the level is different from the second level, the storage drive is adjusted to a level corresponding to a lower indicator requirement in the level and the second level.

In a possible implementation, the storage drive stores different types of data at different levels, the storage drive stores a first type of data at the first level, the storage drive stores a second type of data at the second level, and an indicator requirement corresponding to the first type of data is higher than an indicator requirement corresponding to the second type of data.

In a possible implementation, the storage drive includes a solid-state drive.

In this embodiment, operations performed by units in the apparatus 5000 for prolonging a service life of a storage drive are similar to those described in the method embodiment shown in FIG. 2, and the units may be used to implement functions of the controller in the foregoing method embodiment, and can also implement beneficial effects of the foregoing method embodiment. Details are not described herein again.

FIG. 6 is a diagram of a structure of a controller according to an embodiment of this application. As shown in FIG. 6, the controller 6000 is implemented by using a general bus architecture.

The controller 6000 includes at least one processor 6001, a communication bus 6002, a memory 6003, and at least one interface card 6004.

The processor 6001, the memory 6003, and the interface card 6004 communicate with each other via the communication bus 6002, or may communicate through another method, for example, wireless transmission. The memory 6003 is configured to store instructions. The processor 6001 is configured to execute the instructions stored in the memory 6003. The memory 6003 stores program code. The processor 6001 may invoke the program code stored in the memory 6003, to perform step 201 to step 203 in the embodiment shown in FIG. 2. For specific implementation, refer to specific descriptions of step 201 to step 203 in the embodiment shown in FIG. 2. Details are not described herein again.

Optionally, the processor 6001 is a central processing unit (central processing unit, CPU), or may be another general-purpose processor, a digital signal processor (digital signal processor, DSP), an application-specific integrated circuit (application-specific integrated circuit, ASIC), a field-programmable gate array (field-programmable gate array, FPGA) or another programmable logic device (programmable logic device, PLD), a transistor logic device, a hardware component, or any combination thereof. The PLD is a complex programmable logic device (complex programmable logic device, CPLD), a field-programmable gate array (field-programmable gate array, FPGA), generic array logic (generic array logic, GAL), or any combination thereof.

The communication bus 6002 is configured for information transmission between the processor 6001, the memory 6003, and the interface card 6004. The communication bus 6002 includes an address bus, a data bus, a control bus, and the like. For ease of representation, only one thick line is used to represent the bus in the figure, but this does not mean that there is only one bus or only one type of bus.

Optionally, the memory 6003 is a read-only memory (read-only memory, ROM) or another type of static storage device that can store static information and instructions. Alternatively, the memory 6003 is a random access memory (random access memory, RAM) or another type of dynamic storage device that can store information and instructions. Alternatively, the memory 6003 is an electrically erasable programmable read-only memory (electrically erasable programmable read-only Memory, EEPROM), a compact disc read-only memory (compact disc read-only memory, CD-ROM) or another compact disc storage, an optical disc storage (including a compact disc, a laser disc, an optical disc, a digital versatile disc, a blue-ray disc, or the like), a magnetic disk storage medium or another magnetic storage device, or any other medium that can be configured to carry or store expected program code in a form of instructions or a data structure and that can be accessed by a computer. However, this is not limited thereto. Optionally, the memory 6003 exists independently, and is connected to the processor 6001 via the communication bus 6002. Optionally, the memory 6003 is integrated with the processor 6001.

The interface card 6004 uses any apparatus of a transceiver type for communicating with another device or a communication network. The interface card 6004 includes a wired communication interface. Optionally, the interface card 6004 further includes a wireless communication interface. The wired communication interface is, for example, an Ethernet interface. The Ethernet interface is an optical interface, an electrical interface, or a combination thereof. The wireless communication interface is a wireless local area network (wireless local area network, WLAN) interface, a cellular network communication interface, a combination thereof, or the like.

In specific implementation, as an embodiment, the processor 6001 includes one or more CPUs, for example, a CPU 0 and a CPU 1 shown in FIG. 6.

In specific implementation, as an embodiment, the controller 6000 include a plurality of processors, for example, the processor 6001 and a processor 6005 shown in FIG. 6. Each of the processors is a single-core processor (single-CPU) or a multi-core processor (multi-CPU). The processor herein is one or more devices, circuits, and/or processing cores configured to process data (for example, computer program instructions).

In some embodiments, the memory 6003 is configured to store program code for executing solutions of this application, and the processor 6001 executes the program code stored in the memory 6003. In other words, the apparatus 6000 for prolonging a service life of a storage drive implements the foregoing embodiments of the method for prolonging a service life of a storage drive by using the processor 6001 and the program code in the memory 6003.

It may be understood that method steps in embodiments of this application may be implemented in a hardware manner, or may be implemented in a manner of executing software instructions by the processor 6001. The software instructions may include a corresponding software module. The software module may be stored in a random access memory, a flash memory, a read-only memory, a programmable read-only memory, an erasable programmable read-only memory, an electrically erasable programmable read-only memory, a register, a storage drive, a portable hard drive, a CD-ROM, or any other form of storage medium well-known in the art. In addition, a scope of the apparatus described in this application is not limited thereto, and a structure of the apparatus may not be limited to FIG. 6. The apparatus may be an independent device, or may be a part of a large device. For example, the apparatus may be:
(1) an independent integrated circuit IC, a chip, a chip system, or subsystem;
(2) a set including one or more ICs, where optionally, the IC set may further include a storage component configured to store data and/or instructions;
(3) a module that can be embedded in another device;
(4) a receiver, a terminal, an intelligent terminal, a wireless device, a handheld device, a mobile unit, a vehicle-mounted device, an artificial intelligence device, a machine device, a home device, a medical device, an industrial device, or the like;
(5) others.

It may be clearly understood by a person skilled in the art that, for the purpose of convenient and brief description, for a detailed working process of the foregoing apparatus, refer to a corresponding process in the foregoing method embodiments, and details are not described herein again.

An embodiment of this application further provides a storage medium. The storage medium stores a program. When the program is executed by a processor, the method for prolonging a service life of a storage drive in the foregoing embodiments is implemented.

A person of ordinary skill in the art may be aware that units and algorithm operations in the examples described with reference to embodiments disclosed in this specification can be implemented by electronic hardware, or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to a conventional technology, or some of the technical solutions may be implemented in the form of a software product. The computer software product is stored on a storage medium and includes several instructions to cause a computer device (which may be a personal computer, a server, a network device, or the like) to perform all or a part of the steps of the methods described in embodiments of this application. The foregoing storage medium includes any medium that can store program code, for example, a USB flash drive, a portable hard drive, a read-only memory (Read-Only Memory, ROM), a random access memory (Random Access Memory, RAM), a magnetic disk, or an optical disc.

Names or numbers of steps in this application do not mean that the steps in the method procedure need to be performed in a time/logical sequence indicated by the names or numbers. An execution sequence of the steps in the procedure that have been named or numbered may be changed based on a technical objective to be achieved, provided that same or similar technical effects can be achieved. Unit division in this application is logical division, and there may be another division manner during implementation in actual application. For example, a plurality of units may be combined or integrated into another system, or some features may be ignored or not performed. In addition, the displayed or discussed mutual couplings or direct couplings or communication connections may be implemented through some interfaces. The indirect couplings or communication connections between the units may be implemented in electronic or other similar forms. These are not limited in this application. In addition, units or subunits described as separate components may or may not be physically separate, may or may not be physical units, or may be distributed in a plurality of circuit units. Some or all of the units may be selected based on actual requirements to achieve the objectives of the solutions of this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Numerals used in embodiments of this application are merely used for differentiation for ease of description, but are not intended to limit the scope of embodiments of this application. Sequence numbers of the foregoing processes do not mean an execution sequence, and the execution sequence of the processes should be determined based on functions and internal logic of the processes.

The foregoing embodiments are merely intended for describing the technical solutions of this application other than limiting this application. Although this application is described in detail with reference to the foregoing embodiments, a person of ordinary skill in the art should understand that modifications may still be made to the technical solutions described in the foregoing embodiments or equivalent replacements may be made to some technical features thereof, without departing from the scope of the technical solutions of embodiments of this application.

## Claims

1. A method for prolonging a service life of a storage drive, comprising:
monitoring a first indicator of the storage drive, wherein the storage drive is at a first level; and
adjusting the storage drive from the first level to a second level when the first indicator does not meet a first condition, wherein the storage drive has a plurality of levels, the plurality of levels comprise the first level and the second level, an indicator requirement of the storage drive at the first level is higher than an indicator requirement of the storage drive at the second level, and levels of the storage drive are classified based on indicators of the storage drive.

2. The method according to claim 1, wherein the first indicator comprises a first performance indicator, and the first condition comprises:
the first performance indicator falls within a corresponding range of the performance indicator of the storage drive at the first level.

3. The method according to claim 2, wherein the first performance indicator comprises read/write latency of an I/O, and the first condition comprises:
in a cumulative first time period, a proportion of I/Os with read/write latency not exceeding a first value on the storage drive is greater than or equal to a first threshold, wherein the first threshold is greater than 0 and less than 1.

4. The method according to claim 2 or 3, wherein adjusting the storage drive from the first level to the second level when the first indicator does not meet the first condition comprises:
obtaining a corresponding range of the performance indicator of the storage drive at each level; and
adjusting the storage drive from the first level to the second level when the first performance indicator does not meet the first condition and the first performance indicator falls within a corresponding range of the performance indicator of the storage drive at the second level.

5. The method according to claim 1, wherein the first indicator comprises a first reliability indicator, and the first condition comprises:
the first reliability indicator falls within a corresponding range of the reliability indicator of the storage drive at the first level.

6. The method according to claim 5, wherein the first reliability indicator comprises a quantity of bad tracks, and the first condition comprises:
during reading of data of a specified capacity from the storage drive, the obtained quantity of bad tracks does not exceed a second value.

7. The method according to claim 5 or 6, wherein the first indicator further comprises a first performance indicator, and adjusting the storage drive from the first level to the second level when the first indicator does not meet the first condition comprises:
obtaining a corresponding range of the reliability indicator of the storage drive at each level; and
adjusting the storage drive from the first level to the second level when the first reliability indicator does not meet the first condition and the first reliability indicator falls within a corresponding range of the reliability indicator of the storage drive at the second level, wherein
when it is determined that the first performance indicator falls within a corresponding range of the performance indicator of the storage drive at a specific level, and the level is different from the second level, the storage drive is adjusted to a level corresponding to a lower indicator requirement in the level and the second level.

8. The method according to any one of claims 1 to 7, wherein the storage drive stores different types of data at different levels, the storage drive stores a first type of data at the first level, the storage drive stores a second type of data at the second level, and an indicator requirement corresponding to the first type of data is higher than an indicator requirement corresponding to the second type of data.

9. The method according to any one of claims 1 to 8, wherein the storage drive comprises a solid-state drive.

10. An apparatus for prolonging a service life of a storage drive, comprising:
a monitoring module, configured to monitor a first indicator of the storage drive, wherein the storage drive is at a first level; and
an adjustment module, configured to adjust the storage drive from the first level to a second level when the first indicator does not meet a first condition, wherein the storage drive has a plurality of levels, the plurality of levels comprise the first level and the second level, an indicator requirement of the storage drive at the first level is higher than an indicator requirement of the storage drive at the second level, and levels of the storage drive are classified based on indicators of the storage drive.

11. The apparatus according to claim 10, wherein the first indicator comprises a first performance indicator, and the first condition comprises:
the first performance indicator falls within a corresponding range of the performance indicator of the storage drive at the first level.

12. The apparatus according to claim 11, wherein the first performance indicator comprises read/write latency of an I/O, and the first condition comprises:
in a cumulative first time period, a proportion of I/Os with read/write latency not exceeding a first value on the storage drive is greater than or equal to a first threshold, wherein the first threshold is greater than 0 and less than 1.

13. The apparatus according to claim 11 or 12, wherein the adjustment module is further configured to:
obtain a corresponding range of the performance indicator of the storage drive at each level; and
adjust the storage drive from the first level to the second level when the first performance indicator does not meet the first condition and the first performance indicator falls within a corresponding range of the performance indicator of the storage drive at the second level.

14. The apparatus according to claim 10, wherein the first indicator comprises a first reliability indicator, and the first condition comprises:
the first reliability indicator falls within a corresponding range of the reliability indicator of the storage drive at the first level.

15. The apparatus according to claim 14, wherein the first reliability indicator comprises a quantity of bad tracks, and the first condition comprises:
during reading of data of a specified capacity from the storage drive, the obtained quantity of bad tracks does not exceed a second value.

16. The apparatus according to claim 14 or 15, wherein the first indicator further comprises a first performance indicator, and the adjustment module is further configured to:
obtain a corresponding range of the reliability indicator of the storage drive at each level; and
adjust the storage drive from the first level to the second level when the first reliability indicator does not meet the first condition and the first reliability indicator falls within a corresponding range of the reliability indicator of the storage drive at the second level, wherein
when it is determined that the first performance indicator falls within a corresponding range of the performance indicator of the storage drive at a specific level, and the level is different from the second level, the storage drive is adjusted to a level corresponding to a lower indicator requirement in the level and the second level.

17. The apparatus according to any one of claims 10 to 16, wherein the storage drive stores different types of data at different levels, the storage drive stores a first type of data at the first level, the storage drive stores a second type of data at the second level, and an indicator requirement corresponding to the first type of data is higher than an indicator requirement corresponding to the second type.

18. The apparatus according to any one of claims 10 to 17, wherein the storage drive comprises a solid-state drive.

19. A controller, comprising an interface card, a memory, and a processor, wherein the interface card is configured to receive data, the memory stores the data and a program executable by the processor, and when the processor executes the program, the controller implements the method for prolonging a service life of a storage drive according to any one of claims 1 to 9.

20. A storage system, comprising a controller and a storage drive, wherein the controller comprises a memory and a processor, the memory stores a program, and when the processor executes the program, the method for prolonging a service life of a storage drive according to any one of claims 1 to 9 is implemented.

21. A storage medium, wherein the storage medium stores a program, and when the program is executed by a processor, the method for prolonging a service life of a storage drive according to any one of claims 1 to 9 is implemented.
